# EUROPEAN PATENT SPECIFICATION

(11) **EP 2 248 439 B1**
(45) Date of publication and mention of the grant of the patent: **11.01.2017**
(21) Application number: 10160173.0
(22) Date of filing: 16.04.2010
(51) Int. Cl.: A45F 3/14, A62B 25/00

(54) **Improved flexible strap**
Verbessertes flexibles Band
Bande flexible améliorée

(30) Priority: 06.05.2009 GB 0907747
(43) Date of publication of application: 10.11.2010
(73) Proprietor: Draeger Safety UK Ltd., Blyth, Northumberland NE24 4RG (GB)
(72) Inventor: Wrigley, Gordon, Newcastle-Upon-Tyne Tyne and Wear NE3 5SZ (GB); Townsend, Paul, Cramlington, Northumberland NE23 3QZ (GB)
(74) Representative: McCartney, Jonathan William

(56) References cited:
- WO-A2-2008/131241
- US-A- 4 929 497
- US-A1- 2009 159 364

## Description

The present invention relates to an improved strap of flexible material, in particular, an improved strap of flexible material for use with a harness for breathing apparatus.

Self-contained breathing apparatus (SCBA) harnesses comprise a back plate (or frame) to which a cylinder of breathable gas is mounted. The cylinder of gas is retained on the back plate using a flexible cylinder-retaining strap that is attached to the back plate and tensioned around the cylinder. Typically two flexible shoulder straps are each attached at a first end to an upper portion of the back plate and at a second end to a lower portion of the back plate. A flexible waist strap (or belt) is also attached to the back plate. This enables the harness to be carried on the back of a user.

For breathing apparatus of the above kind which is used by fire-fighters, it is important that the cylinder-retaining, waist and shoulder straps are flame retardant because the harness must be capable of withstanding high-temperatures.

WO 2008/131241 A2 describes a backpack assembly for a self contained breathing apparatus comprising a plurality of components positioned in housings that define a body for the backpack assembly. The body is assembled to a back frame. A pivoting and swivelling hip plate is connected to the back frame in multiple distinct positions to provide a customizable fit for the wearer.

It is known to use straps that are woven from Kevlar (RTM) or Nomex (RTM) fibres. Such straps are intrinsically flame retardant but are relatively expensive due to the cost of Kevlar and Nomex. The straps that are produced from the aforementioned materials must also be sealed at their edges in order to prevent fraying. However, it is not possible to heat-seal the ends because of the flame retardant properties of the fibres. The ends of the straps must therefore be folded over twice and stitched. This results in additional manufacturing expense and time.

According to one aspect of the present invention there is provided an elongate strap of flexible material for use with a harness for breathing apparatus, the strap comprising a core substrate provided on first and second surfaces with a flame retardant non-slip layer. Preferably the flame retardant layer is a coated layer. The core substrate is preferably a textile. The strap can be manufactured cheaply and easily and the flame retardant layers allow the strap to be used in high-temperature environments. Use of the non-slip material means that the strap can grip adjacent objects.

In one embodiment the flame retardant layers are rubber. The rubber may be a synthetic rubber, a butyl/nitrile synthetic rubber mix; silicone rubber or flexible PVC. The flame retardant layers may have anti-oxidant additives to improve the flame retardant properties. The thickness of the flame retardant layers may be between 0.3-1mm.

The textile material may be a polyamide such as nylon. The thickness of the textile may be 0.5-1.5mm. The textile may be woven, comprising warp threads and weft threads. Preferably the strap is formed such that the warp threads of the textile extend in a direction of elongation of the strap, to provide strength.

The invention also comprises a gas-cylinder retaining strap, or a shoulder strap, or a waist strap for a harness for breathing apparatus comprising a strap according to any statement herein.

The invention also comprises a breathing apparatus having a strap according to any statement herein.

According to a second aspect of the present invention there is provided a method of manufacturing a strap of flexible material for use with a harness for breathing apparatus, the method comprising applying a flame retardant layer to first and second surfaces of a textile. Preferably the flame retardant layer is provided as a coating. The flame retardant layer may be non-slip. The flame retardant layer may be applied to the first and second surfaces of the textile under heat and/or pressure.

In one embodiment the strap is formed from a woven textile having warp threads and weft threads. Preferably the strap is formed such that the warp threads extend in the direction of elongation of the strap.

The invention may comprise any combination of the features and/or limitations referred to herein, except combinations of such features as are mutually exclusive.

Embodiments of the present invention will now be described, by way of example, with reference to the accompanying drawings, in which:
Figure 1 schematically shows an elongate strap of flexible material according to the present invention;
Figure 2 schematically shows the cross-section A-A of Figure 1;
Figure 3 schematically shows a method of manufacturing a strap according to the present invention;
Figure 4 schematically shows a sheet of material from which a number of straps can be cut; and
Figure 5 schematically shows a number of straps used on a harness for breathing apparatus.

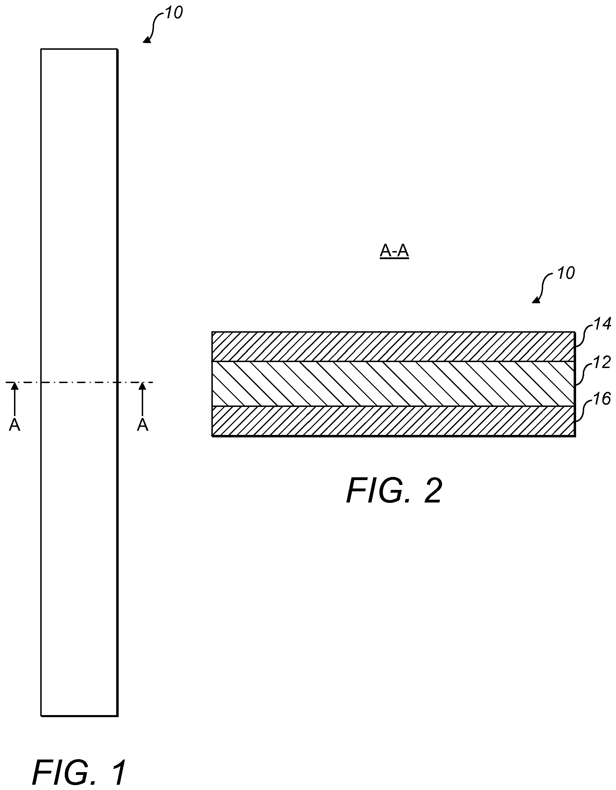

**Figure 1** shows a flexible elongate strap 10 according to the present invention. The strap 10 has a layered structure as shown in **Figure 2****.** The layered structure comprises a woven textile 12 with coated layers 14, 16 on first and second surfaces, of a flame-retardant non-slip material.

In this embodiment the textile is woven from polyamide fibres such as nylon. The woven nylon is 1000 denier and has a thickness of approximately 1.25mm. The flame retardant non-slip material layers 14, 16 are of a butyl/nitrile synthetic rubber mix which is flame retardant. The addition of anti-oxidant additives improves the flame retardant properties of the non-slip layers 14, 16. Each of the non-slip layers has a thickness of approximately 0.7mm.

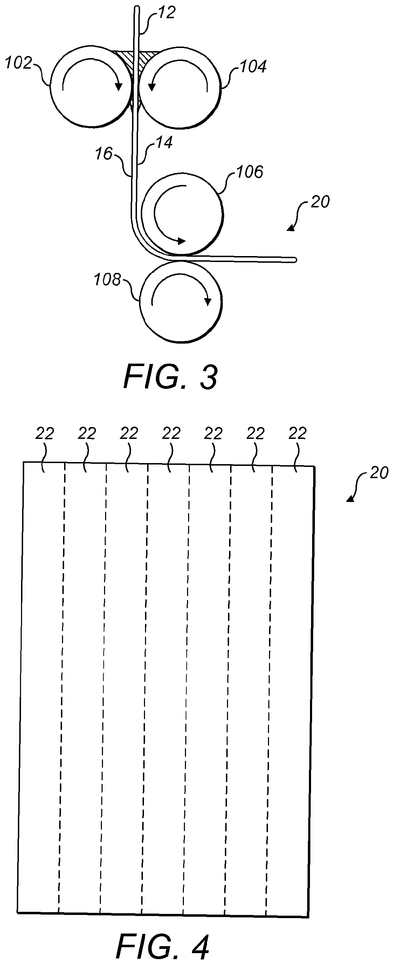

With reference to **Figure 3****,** a sheet 20 of the flexible layered material used to make the strap 10 is manufactured by calendaring the butyl/nitrile synthetic rubber mix onto both sides of a sheet of woven nylon 12. This is done by heating the synthetic rubber mix and continuously pouring it onto both surfaces of the woven nylon sheet 12 whilst feeding the sheet of woven nylon through two oppositely rotating rollers 102, 104. The pressure of the rollers 102, 104 causes a layer of synthetic rubber mix to become bonded to each side of the woven sheet of nylon. The sheet of woven nylon 12 coated with layers 14, 16 of synthetic rubber on either side is then fed through a second set of oppositely rotating rollers 106, 108 so as to apply further pressure to the layered material. This manufacturing method results in the layered structure of Figure 2.

The woven nylon textile 12 has a textured surface and the synthetic rubber mix is applied to first and second surfaces under the action of pressure and heat. This results in a laminate structure the layers of which are difficult to separate.

Referring now to **Figure 4****,** the sheet of flexible material 20 manufactured by the above described process is cut into a series of elongate strips 22. The sheet 20 is cut parallel to the direction of elongation of the warp threads of the woven textile for optimum strength. The strips 22 can then be cut into the required lengths to form straps 10. It is not necessary to seal the ends or edges of the straps 10 because the rubber layers 14, 16 prevent the woven nylon textile 10 from fraying.

The straps 10 can be manufactured quickly, easily and cheaply. The woven nylon textile 12 is a relatively cheap material but is not flame retardant. The flame retardant rubber layers 14, 16 shield the woven nylon core 12 and ensure that the straps as a whole are flame retardant. The strength of the strap 10 is provided by the woven nylon textile material 12. Specifically, the warp threads that extend along the direction of elongation of the strap provide the strength of the strap 10. The strap 10 is also slightly elastic which is particularly useful for certain applications which require a strap to retain an object under tension.

The strap 10 has a non-slip surface on either side that in this embodiment is provided by the synthetic rubber layers 14, 16. This means that the strap 10 has a relatively high coefficient of friction and therefore exhibits gripping properties.

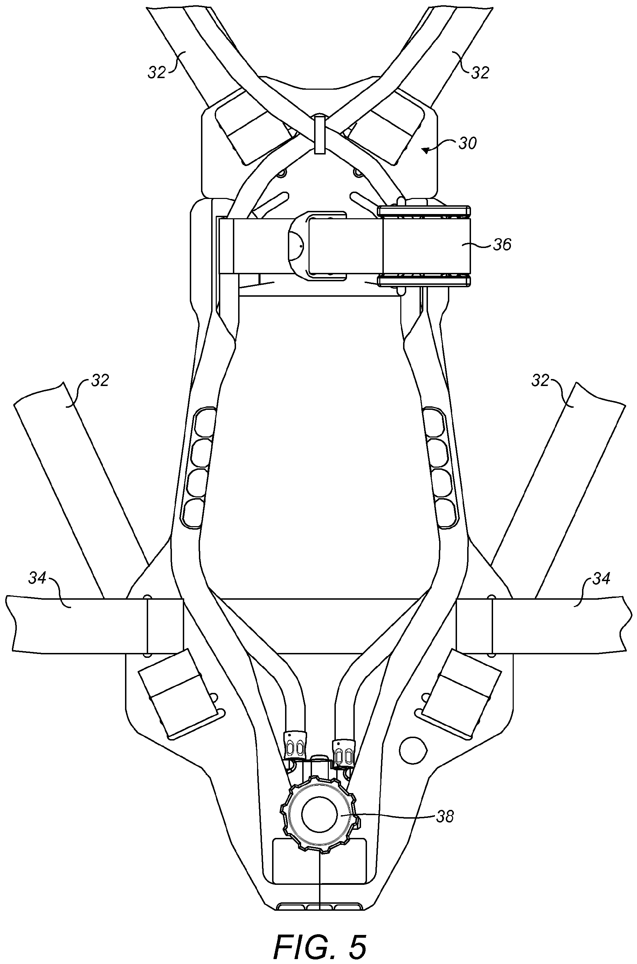

**Figure 5** shows the straps 10 being used on a harness 30 for breathing apparatus that is to be worn on the back of a user. The straps 10 are used as shoulder straps 32, a waist strap 34 and a gas-cylinder retaining strap 36 (cylinder not shown).

The non-slip rubber layers 14, 16 of the shoulder and waist straps 32, 34 enable the straps to grip the clothing of the user. This means that the user wearing the harness feels that the harness is held securely and tightly to his/her body. In particular, a secure feeling of the harness against the user's body can be obtained without over tightening the shoulder and waist straps 32, 34 and thus without unduly restricting the wearer's movement.

The non-slip rubber layers 14, 16 of the gas-cylinder retaining strap 36 allow the strap to grip a gas-cylinder loaded onto the harness 30. This inhibits rotation which would exert an unwanted stress on the connection between the gas-cylinder and the reducer valve 38 to which it is connected. Conventionally, a separate rubber pad is provided in order to inhibit rotation of the gas-cylinder. The use of a cylinder-retaining strap 36 having a non-slip coating therefore removes the need for the separate rubber pad which therefore reduces both the cost of the harness and the assembly time.

As described above, the flame retardant layers 14, 16 of the woven nylon textile 12 renders the straps 10 flame retardant. This means that they can be used on a harness for breathing apparatus used by fire-fighters and the like in high-temperature environments.

## Claims

1. A strap (10) of flexible material for use with a harness for breathing apparatus, the strap (10) **characterised by** comprising a core substrate (12) provided on first and second surfaces with a flame retardant non-slip layer (14, 16).

2. A strap (10) according to claim 1, wherein the flame retardant layer is a coated layer.

3. A strap according to any preceding claim, wherein the flame retardant layer is rubber.

4. A strap (10) according to claim 3, wherein the rubber is a synthetic rubber, a butyl/nitrile synthetic rubber mix; silicone rubber or flexible PVC rubber.

5. A strap (10) according to any preceding claim, wherein the flame retardant material comprises anti-oxidant additives.

6. A strap (10) according to any preceding claim, wherein the thickness of each of the flame retardant layers (14, 16) is between 0.3-1mm.

7. A strap (10) according to any preceding claim, wherein the thickness of the core substrate (12) is 0.5-1.5mm.

8. A method of manufacturing a strap (10) of flexible material for use with a harness for breathing apparatus, comprising applying a flame retardant non-slip layer (14, 16) to first and second surfaces of a core substrate (12).

9. A method of manufacturing a strap (10) according to claim 8, wherein the flame retardant layer (14, 16) is provided as a coating.

10. A method of manufacturing a strap (10) according to claim 8 or 9, wherein the flame retardant layer (14, 16) is applied to the first and second surfaces of the core substrate (12) under heat and/or pressure.

11. A strap (10) according to any of claims 1-7 or a method according to any of claims 8-10, wherein the core substrate (12) comprises a textile such as a woven textile having warp threads and weft threads.

12. A strap (10) or method according to claim 11, wherein the textile material is a polyamide.

13. A strap (10) or method according to claim 11 or 12, wherein the strap is formed such that the warp threads of the textile extend in a direction of elongation of the strap.

14. A gas-cylinder retaining strap (36), or a shoulder strap (32), or a waist strap (34) for a harness for breathing apparatus comprising an elongate strap (10) according to any of claims 1-7 or 11-13.

15. Breathing apparatus having a strap according to any of claims 1-7 or 11-14.

## Patentansprüche

1. Gurt (10) aus flexiblem Material zur Verwendung bei einem Geschirr für ein Atemschutzgerät, wobei der Gurt (10) **dadurch gekennzeichnet ist, dass** er ein Kernsubstrat (12) umfasst, das auf der ersten und zweiten Fläche mit einer flammenhemmenden rutschfesten Auflage (14, 16) bereitgestellt wird.

2. Gurt (10) gemäß Anspruch 1, wobei die flammenhemmende Auflage eine beschichtete Auflage ist.

3. Gurt (10) gemäß einem beliebigen der vorhergehenden Ansprüche, wobei die flammenhemmende Auflage Gummi ist.

4. Gurt (10) gemäß Anspruch 3, wobei der Gummi ein synthetischer Gummi ist, eine Butyl/Nitril synthetische Gummimischung, Silikongummi oder flexibler PVC-Gummi.

5. Gurt (10) gemäß einem beliebigen der vorhergehenden Ansprüche, wobei das flammenhemmende Material Antioxydationsmittel umfasst.

6. Gurt (10) gemäß einem beliebigen der vorhergehenden Ansprüche, wobei die Dicke jeder flammenhemmenden Schicht (14, 16) zwischen 0,3-1 mm beträgt.

7. Gurt (10) gemäß einem beliebigen der vorhergehenden Ansprüche, wobei die Dicke des Kernsubstrats (12) 0,5-1.5 mm beträgt.

8. Verfahren zur Herstellung eines Gurts (10) aus flexiblem Material zu Verwendung mit einem Geschirr für ein Atemschutzgerät, umfassend das Auftragen einer flammenhemmenden rutschfesten Auflage (14, 16) auf die erste und zweite Fläche eines Kernsubstrats (12).

9. Verfahren zur Herstellung eines Gurts (10) gemäß Anspruch 8, wobei die flammenhemmende Auflage (14, 16) als Beschichtung bereitgestellt wird.

10. Verfahren zur Herstellung eines Gurts (10) gemäß Anspruch 8 oder 9, wobei die flammenhemmende Auflage (14, 16) auf die erste und zweite Fläche der Kernträgerschicht (12) unter Hitze und/oder Druck aufgetragen wird.

11. Gurt (10) gemäß einem beliebigen der Ansprüche 1-7 oder Verfahren gemäß einem beliebigen der Ansprüche 8-10, wobei das Kernsubstrat (12) ein Gewebe ist, wie eine gewobenes Gewebe mit Kett- und Schussfäden.

12. Gurt (10) gemäß Anspruch 11, wobei das Gewebematerial Polyamid ist.

13. Gurt (10) oder Verfahren gemäß Anspruch 11 oder 12, wobei der Gurt dergestalt gebildet ist, dass Kettfäden des Gewebes sich in einer Dehnungsrichtung des Gurts erstrecken.

14. Gasflaschenhaltegurt (36) oder Schultergurt (32) oder Taillengurt (34) für ein Geschirr eines Atemschutzgeräts, umfassend einen länglichen Gurt (10) gemäß einem beliebigen der Ansprüche 1-7 oder 11-13.

15. Atemschutzgerät mit Gurt gemäß einem beliebigen der Ansprüche 1-7 oder 11-14.

## Revendications

1. Sangle (10) en matière flexible destinée à être utilisée avec un harnais pour appareil respiratoire, la sangle (10), **caractérisée en ce qu'**elle comprend un substrat de noyau (12) prévu sur une première et une seconde surfaces d'une couche ignifuge antidérapante (14, 16).

2. Sangle (10) selon la revendication 1, dans laquelle la couche ignifuge est une couche revêtue.

3. Sangle selon l'une quelconque des revendications précédentes, dans laquelle la couche ignifuge est du caoutchouc.

4. Sangle (10) selon la revendication 3, dans laquelle le caoutchouc est un caoutchouc synthétique, un mélange de caoutchouc synthétique butyle / nitrile ; le caoutchouc de silicone ou le caoutchouc flexible de PVC.

5. Sangle (10) selon l'une quelconque des revendications précédentes, dans laquelle le matériau ignifuge comprend des additifs antioxydants.

6. Sangle (10) selon l'une quelconque des revendications précédentes, dans laquelle l'épaisseur de chacune des couches ignifugeantes (14, 16) est comprise entre 0,3 et 1 mm.

7. Sangle (10) selon l'une quelconque des revendications précédentes, dans laquelle l'épaisseur du substrat de coeur (12) est de 0,5 à 1,5 mm.

8. Procédé de fabrication d'une sangle (10) en matériau souple destinée à être utilisée avec un harnais pour appareil respiratoire, comprenant l'application d'une couche antidérapante ignifuge (14, 16) sur des première et deuxième surfaces d'un substrat (12) de noyau.

9. Procédé de fabrication d'une sangle (10) selon la revendication 8, dans lequel la couche ignifuge (14, 16) est fournie en tant que revêtement.

10. Procédé de fabrication d'une sangle (10) selon la revendication 8 ou 9, dans lequel la couche ignifuge (14, 16) est appliquée sur les première et seconde surfaces du substrat de noyau (12) sous l'action de la chaleur et / ou de la pression.

11. Sangle (10) selon l'une quelconque des revendications 1 à 7 ou procédé selon l'une quelconque des revendications 8 à 10, dans lequel le substrat de noyau (12) comprend un textile tel qu'un textile tissé ayant des fils de chaîne et des fils de trame.

12. Sangle (10) ou procédé selon la revendication 11, dans lequel la matière textile est un polyamide.

13. Sangle (10) ou procédé selon la revendication 11 ou 12, dans lequel la sangle est formée de sorte que les fils de chaîne du textile s'étendent dans une direction d'allongement de la sangle.

14. Sangle de retenue de cylindre de gaz (36), ou bandoulière (32), ou sangle de ceinture (34) pour harnais pour appareil respiratoire comprenant une sangle allongée (10) selon l'une quelconque des revendications 1 à 7 ou 11 à 13.

15. Appareil de respiration ayant une sangle selon l'une quelconque des revendications 1 à 7 ou 11 à 14.
